# EUROPÄISCHE PATENTSCHRIFT

(11) **EP 2 632 635 B1**
(45) Veröffentlichungstag und Bekanntmachung des Hinweises auf die Patenterteilung: **06.04.2016**
(21) Anmeldenummer: 11761561.7
(22) Anmeldetag: 21.09.2011
(51) Int. Cl.: B24B 41/04, B24B 45/00, B24B 55/00, B24B 23/02

(54) **ABLAUFSICHERUNGSVORRICHTUNG**
RUNOFF SAFETY DEVICE
DISPOSITIF DE SÉCURITÉ PAR SERRAGE IMPERDABLE

(30) Priorität: 29.10.2010 DE 102010043188
(43) Veröffentlichungstag der Anmeldung: 04.09.2013
(73) Patentinhaber: Robert Bosch GmbH, 70442 Stuttgart (DE)
(72) Erfinder: ESENWEIN, Florian, 73066 Uhingen-Holzhausen (DE)
(86) Internationale Anmeldenummer: PCT/EP2011/066380
(87) Internationale Veröffentlichungsnummer: WO 2012/055642

(56) Entgegenhaltungen:
- EP-A2- 2 239 550
- WO-A1-02/097298
- WO-A1-2011/120730
- DE-A1- 4 131 514
- DE-A1- 4 426 969
- DE-A1-102010 014 393

## Beschreibung

### Stand der Technik

Es sind bereits Abtaufsicherungsvorrichtungen zur Vermeidung eines Ablaufens eines Spannelements und/oder eines Werkzeugs von einer Spindel in einem Bremsbetrieb bekannt, die eine Übertragungseinheit umfassen.

In der EP 2 239 550 A2 ist eine Unwuchtausgleichsvorrichtung offenbart, welche mit einer Welle drehfest verbunden ist. Die Unwuchtausgleichsvorrichtung ist für eine Schleifmaschine oder eine Winkelschleifmaschine ausgebildet. Die Unwuchtausgleichsvorrichtung nimmt neben der Auswuchtfunktion zusätzlich eine Adapterfunktion ein, zur Aufnahme einer Schleif- oder Schruppscheibe auf der Welle. Nachteilig ist, dass die Schleif- oder Schruppscheibe der Schleifmaschine von der Spindel ablaufen kann.

Die DE 44 26 969 A1 offenbart eine Handwerkzeugmaschine mit einer Arbeitsspindel, die eine Schleifscheibe lösbar zwischen einer Sicherungsmutter und einem Stützflansch trägt. Zur Vermeidung eines Abdrehens der Sicherungsmutter von einem Gewindestutzen der Handwerkzeugmaschine besitzt die Handwerkzeugmaschine eine Scheibenauflaufsicherung. Nachteilig ist, dass es im Betrieb der Handwerkzeugmaschine zu Unwuchten kommen kann.

### Offenbarung der Erfindung

Die Erfindung geht aus von einer Ablaufsicherungsvorrichtung, insbesondere einer Handwerkzeugmaschinenablaufsicherungsvorrichtung, zur Vermeidung eines Ablaufens eines Spannelements und/oder eines Werkzeugs von einer Spindel in einem Bremsbetrieb, mit zumindest einer Übertragungseinheit, wobei die Übertragungseinheit ein erstes Übertragungselement, ein relativ zum ersten Übertragungselement bewegbares zweites Übertragungselement und eine Bewegungsänderungseinheit umfasst, die dazu vorgesehen ist, in dem Bremsbetrieb eine erste Relativbewegung zwischen dem ersten Übertragungselement und dem zweiten Übertragungselement in eine zweite Relativbewegung zu überführen.

Es wird vorgeschlagen, dass die Ablaufsicherungsvorrichtung zumindest eine Unwuchtausgleichseinheit aufweist, die dazu vorgesehen ist, Unwucht der Übertragungseinheit in einem Betrieb zumindest zu reduzierenden, wobei die Unwuchtausgleichseinheit zumindest ein Unwuchtausgleichselement aufweist, das beweglich in dem ersten Übertragungselement der Übertragungseinheit gelagert ist. Ein "Spannelement" soll hier insbesondere eine Spannmutter oder einen Spannflansch zum Auf- bzw. Abschrauben auf die bzw. von der Spindel definieren, die oder der dazu vorgesehen ist, das Werkzeug axial gegen die Übertragungseinheit zu verspannen. Unter einer "Übertragungseinheit" soll hier insbesondere eine Einheit verstanden werden, die dazu vorgesehen ist, Kräfte und/oder Drehmomente von einem Abtrieb, insbesondere einer Spindel einer Handwerkzeugmaschine, auf ein Werkzeug zu übertragen. In diesem Zusammenhang soll unter "vorgesehen" insbesondere speziell ausgestattet und/oder speziell ausgelegt verstanden werden. Unter einem "Bremsbetrieb" soll hier insbesondere ein Betrieb einer Handwerkzeugmaschine, insbesondere einer Spindel der Handwerkzeugmaschine, verstanden werden, in dem die Spindel mittels einer Bremsvorrichtung abgebremst wird, so dass ein Nachlaufen der Spindel, wie beispielsweise bei einer Unterbrechung einer Stromzufuhr zu einem Elektromotor, vorteilhaft zumindest weitgehend verhindert werden kann. Bei dem Bremsbetrieb kann es durch Massenträgheitsmomente des Werkzeugs, insbesondere eines scheibenförmigen Werkzeugs, zu einer Relativbewegung zwischen dem auf der Spindel befestigten Werkzeug, der Ablaufsicherungsvorrichtung und einer zum Festspannen des Werkzeugs auf der Spindel vorgesehenen Spannmutter kommen. Die Relativbewegung zwischen dem Werkzeug und der Spannmutter kann dazu führen, dass die Spannmutter gelöst wird und somit von der Spindel ablaufen kann. Mittels der erfindungsgemäßen Ablaufsicherungsvorrichtung kann ein derartiges Ablaufen der Spannmutter von der Spindel und somit ein Lösen des Werkzeugs von der Spindel vorteilhaft vermieden werden. Unter einer "Unwuchtausgleichseinheit" soll hier insbesondere eine Einheit verstanden werden, die dazu vorgesehen ist, Schwingungen, insbesondere durch eine Rotation eines Körpers um eine Rotationsachse hervorgerufene Schwingungen, mittels eines Ausgleichs einer Massenverteilung des Körpers, insbesondere eines Ausgleichs der Massenverteilung um die Rotationsachse, zumindest im Wesentlichen zu reduzieren und insbesondere zumindest im Wesentlichen auszugleichen. Mittels der erfindungsgemäßen Ausgestaltung der Ablaufsicherungsvorrichtung können Schwingungen in einem Betrieb, insbesondere bei einer Rotation, vorteilhaft zumindest im Wesentlichen verhindert werden. Ferner kann ein durch die Schwingungen hervorgerufener Verschleiß von rotierenden Bauteilen vorteilhaft gering gehalten werden. Hierdurch kann eine lange Lebensdauer von Bauteilen und/oder Handwerkzeugmaschinen erreicht werden, die eine erfindungsgemäße Ablaufsicherungsvorrichtung umfassen.

Des Weiteren wird vorgeschlagen, dass die Unwuchtausgleichseinheit zumindest ein Unwuchtausgleichselement aufweist, das beweglich in einem Übertragungselement der Übertragungseinheit gelagert ist. Unter einem "Unwuchta.usgleichseiement" soll hier insbesondere ein Element verstanden werden, das gezielt dazu vorgesehen ist, eine Massenverteilung eines rotierenden Körpers bezogen auf eine Rotationsachse zu verändern und/oder zu beeinflussen, so dass durch eine Unwucht auftretende Kräfte reduziert werden können, insbesondere ausgeglichen werden können. Besonders bevorzugt umfasst die Unwuchtausgleichseinheit eine Mehrzahl an Unwuchtausgleichselementen, die beweglich im Übertragungselement der Übertragungseinheit gelagert sind. Eine Anzahl von Unwuchtausgleichselementen ist jeweils bei unterschiedlichen an der Spindel befestigbaren scheibenförmigen Werkzeugen abhängig von einer durch die Rotation des jeweiligen Werkzeugs hervorgerufenen Unwucht, einem Durchmesser des jeweiligen Werkzeugs, einer Abmessung, insbesondere eines Radius, des Unwuchtausgleichselements und einer Dichte des verwendeten Unwuchtausgleichselements. Der Ausdruck" in...gelagert" sofl hier eine räumliche Anordnung definieren. Bevorzugt wird das Unwuchtausgleichselement von zumindest zwei, insbesondere von zumindest drei Seiten des Übertragungselements, in einer Ebene betrachtet, umschlossen. Das Übertragungselement ist bevorzugt aus einem metallischen Werkstoff gebildet. Somit können vorteilhaft geringe Toleranzen, insbesondere bei einer Fertigung des Übertragungselements, eingehalten werden, so dass eine sichere Funktionsweise der Unwuchtausgleichseinheit gewährleistet werden kann. Es ist jedoch auch denkbar, dass das Übertragungselement aus einem anderen, einem Fachmann als sinnvoll erscheinenden Material ausgebildet ist. Eine Kombination eines beweglichen Unwuchtausgleichselements oder mehrerer Unwuchtausgleichseiemente mit einem festen Unwuchtausgleichselement oder mehreren festen Unwuchtausgleichselementen für eine Reduzierung, insbesondere eine Kompensation, einer Unwucht ist ebenfalls denkbar. Es kann vorteilhaft eine kompakte Bauweise der erfindungsgemäßen Abfaufsicherungsvorrichtung erreicht werden.

Vorteilhafterweise ist das Unwuchtausgleichselement als Wälzkörper ausgebildet. Bevorzugt ist das Unwuchtausgleichselement als Kugel ausgebildet. Bei einem Durchmesser eines auf der Spindel befestigbaren Werkzeugs von ca. 125 mm weist die Unwuchtausgleichseinheit bevorzugt zumindest mehr als 6 Kugeln auf, insbesondere ca. 7 bis 12 Kugeln. Bei einem Durchmesser eines auf der Spindel befestigbaren Werkzeugs von ca. 230 mm weist die Unwuchtausgleichseinheit bevorzugt zumindest mehr als 4 Kugeln auf, insbesondere ca. 5 bis 9 Kugeln. Hierdurch kann sich das Unwuchtausgleichselement vorteilhaft bei einer Rotation der Übertragungseinheit selbständig in eine Auswuchtposition bewegen. Eine Anpassung der Auswuchtposition an sich verändernde Bedingungen erfolgt somit im Wesentlichen automatisch. Es ist jedoch auch denkbar, das Unwuchtausgleichselement in einer anderen, einem Fachmann als sinnvoll erscheinenden Form auszubilden, wie beispielsweise als Scheibe usw. Mittels einer Ausbildung des Unwuchtausgleichselements als Wälzkörper kann besonders vorteilhaft eine reibungsarme Unwuchtausgleichseinheit erreicht werden. Ferner kann das Unwuchtausgleichselement vorteilhaft in Abhängigkeit von einer durch eine Unwucht erzeugten Kraft eine entsprechende Massenverteilung zum Ausgleich der Unwucht erzeugen.

Ferner wird vorgeschlagen, dass der Wälzkörper zumindest in einer einstückig mit dem Übertragungselement ausgebildeten Laufbahn geführt ist. Unter "einstückig" soll insbesondere zumindest stoffschlüssig verbunden verstanden werden, beispietsweise durch einen Schweißprozess, einen Klebeprozess, einen Anspritzprozess, wie beispielsweise ein Ein- oder Mehrkomponentenspritzverfahren, und/oder einen anderen, dem Fachmann als sinnvoll erscheinenden Prozess, und/oder vorteilhaft in einem Stück geformt verstanden werden, wie beispielsweise aus einem einzelnen Rohling. Besonders bevorzugt ist die Laufbahn konzentrisch um eine Rotationsachse der Übertragungseinheit angeordnet. Die Laufbahn wird insbesondere von einer zu einem Radius des als Kugel ausgebildeten Unwuchtausgleichselements korrespondierenden Vertiefung und/oder Ausnehmung im Übertragungselement gebildet. Es ist jedoch auch denkbar, dass mehr als eine Laufbahn im Übertragungselement vorgesehen ist, insbesondere vier Laufbahnen, so dass das als Kugel ausgebildete Unwuchtausgleichselement von zumindest vier Seiten von Laufbahnen umgeben ist. Es kann eine vorteilhafte Führung des Unwuchtausgleichselements im Übertragungselement erreicht werden.

Vorzugsweise ist das Unwuchtausgleichselement in einer sich entlang einer Umfangsrichtung erstreckenden u-förmigen Nut des Übertragungselements beweglich gelagert. Die Umfangsrichtung erstreckt sich bevorzugt in einer Ebene, die senkrecht zur Rotationsachse der Übertragungseinheit verläuft. Die Nut erstreckt sich hierbei bevorzugt konzentrisch zur Rotationsachse des Übertragungselements. Es kann eine konstruktiv einfache Integration des Unwuchtausgleichselements in das Übertragungselement erreicht werden.

Des Weiteren wird vorgeschlagen, dass die Unwuchtausgleichseinheit ein Verschlusselement aufweist, das dazu vorgesehen ist, die Nut abzudichten. Unter einem "Verschlusselement" soll hier insbesondere ein Element verstanden werden, das eine mit einem zu verschließenden Bauteil korrespondierende geometrische Form aufweist und eine zumindest teilweise dichtende Wirkung aufweist. Das Verschlusselement ist bevorzugt aus einem metallischen Werkstoff gebildet. Es ist jedoch auch denkbar, dass das Verschlusselement aus einem Kunststoff, insbesondere aus einem faserverstärkten Kunststoff, oder aus einem Sinterwerkstoff oder dergleichen gebildet ist. Besonders bevorzugt ist das Verschlusselement mittels einer stoffschlüssigen Verbindung, wie beispielsweise einer Klebeverbindung, einer Schweißverbindung, insbesondere mittels Laserschweißen, usw. am und/oder im Übertragungselement angeordnet. Es ist jedoch auch denkbar, dass das Verschlusselement kraftschlüssig und/oder formschlüssig in der Nut angeordnet ist, wie beispielsweise mittels eines Umbördelns und/oder mittels einer Presspassung, wobei die kraftschlüssige und/oder formschlüssige Verbindung bevorzugt derart ausgebildet ist, dass eine Dichtungsfunktion erzielt werden kann. Eine Anordnung, insbesondere in Kontaktbereichen des Verschlusselements und der Nut, von zusätzlichen Dichtungselementen, um die Nut vor eindringendem Schmutz zu schützen, ist ebenfalls denkbar. Die Nut bildet im Zusammenwirken mit dem Verschlusselement insbesondere einen kreisringförmigen Hohlraum zur Aufnahme des Unwuchtausgleichselements. Die Nut, insbesondere der unter einem Zusammenwirken mit dem Dichtungselement entstehende Hohlraum, kann vorteilhaft vor eindringendem Schmutz geschützt werden, so dass vorteilhaft eine Funktionatität der Unwuchtausgleichseinheit im Wesentlichen sichergestellt werden kann.

Vorteilhafterweise ist das Verschlusselement kreisringförmig ausgebildet. Somit kann besonders vorteilhaft eine Abdichtung der Nut mittels des Verschlusselements erreicht werden. Ferner kann mittels einer Ausbildung aus einem elastischen Kunststoff und einer kreisringförmigen Ausbildung vorteilhaft auf zusätzüche Dichtungselemente zur Abdichtung des durch ein Zusammenwirken der Nut mit dem Verschlusselement entstandenen kreisringförmigen Hohlraums verzichtet werden. Das Verschlusselement kann beispielsweise mittels einer Presspassung in der Nut, insbesondere in einem Aufnahmebereich der Nut, gehalten werden und vorteilhaft die Nut gegen eindringenden Schmutz schützen.

Ferner wird vorgeschlagen, dass die Unwuchtausgieichseinheit zumindest ein Dämpfungselement umfasst, das in der Nut des Übertragungselements angeordnet ist. Das Dämpfungselement ist bevorzugt als Dämpfungsflüssigkeit ausgebildet. Eine Ausbildung des Dämpfungselements aus einem Elastomer oder anderen, einem Fachmann als sinnvoll erscheinenden Materialien ist ebenfalls denkbar. Bei einer Ausbildung des Dämpfungselements aus einem Elastomer bildet das Dämpfungselement die Laufbahn des Unwuchtausgleichselements. Mittels des Dämpfungselements kann insbesondere vorteilhaft ein gedämpftes Ansprechverhalten des Unwuchtausgleichselements erreicht werden, so dass insbesondere bei einer Ausführung des Unwuchtausgleichselements als Kugel ein Rollen zum Ausgleich einer Unwucht zumindest teilweise verzögert und/oder gedämpft werden kann. Ferner können vorteilhaft Schwingungen des sich bewegenden Unwuchtausgleichselements gedämpft werden.

Vorzugsweise ist die Übertragungseinheit abnehmbar mit der Spindel koppelbar. Unter annehmbar" soll hier insbesondere eine Entkopplung der Übertragungseinheit von der Spindel verstanden werden, wobei eine Funktionalität der Übertragungseinheit, insbesondere eine Relativbewegung zwischen einem ersten Übertragungselement und einem zweiten Übertragungselement, in einem entkoppelten Zustand erhalten bleibt. Es kann durch die Abnehmbarkeit der Übertragungseinheit besonders vorteilhaft eine hohe Flexibilität und somit ein großes Einsatzgebiet für die erfindungsgemäße Ablaufsicherungsvorrichtung erreicht werden.

Die Erfindung geht ferner aus von einer Handwerkzeugmaschine, insbesondere einem Winkelschleifer, mit einer erfindungsgemäßen Ablaufsicherungsvorrichtung. Hierdurch kann vorteilhaft eine in einem Betrieb vibrationsarme Handwerkzeugmaschine zur Verfügung gestellt werden. Es kann somit vorteilhaft ein hoher Bedienkomfort erreicht werden.

### Zeichnung

Weitere Vorteile ergeben sich aus der folgenden Zeichnungsbeschreibung, In der Zeichnung sind Ausführungsbeispiele der Erfindung dargestellt.

Es zeigen:
- Fig. 1: eine Handwerkzeugmaschine mit einer erfindungsgemäßen Ablaufsicherungsvorrichtung in einer schematischen Darstellung,
- Fig. 2: eine Detailansicht einer Spindel der Handwerkzeugmaschine aus Fig. 1 mit der an der Spindel angeordneten erfindungsgemäßen Ablaufsicherungsvorrichtung in einer schematischen Darstellung,
- Fig. 3: eine Detailansicht der erfindungsgemäßen Ablaufsicherungsvorrichtung in einer werkzeugseitigen Ansicht,
- Fig. 4: eine Detailansicht der erfindungsgemäßen Ablaufsicherungsvorrichtung in einer maschinenseitigen Ansicht,
- Fig. 5: eine perspektivische Detailansicht der erfindungsgemäßen Ablaufsicherungsvorrichtung in einem geöffneten Zustand mit einem Schnitt entlang der Linie V-V aus Fig. 3,
- Fig. 6: eine weitere perspektivische Detailansicht der erfindungsgemäßen Ablaufsicherungsvorrichtung in einem geöffneten Zustand mit einem Schnitt entlang der Linie V-V aus Fig. 3 und
- Fig. 7: eine perspektivische Detailansicht einer alternativen erfindungsgemäßen Ablaufsicherungsvorrichtung in einem geöffneten Zustand mit einem analogen Schnitt gemäß der Linie V-V aus Fig. 3.

### Beschreibung der Ausführungsbeispiele

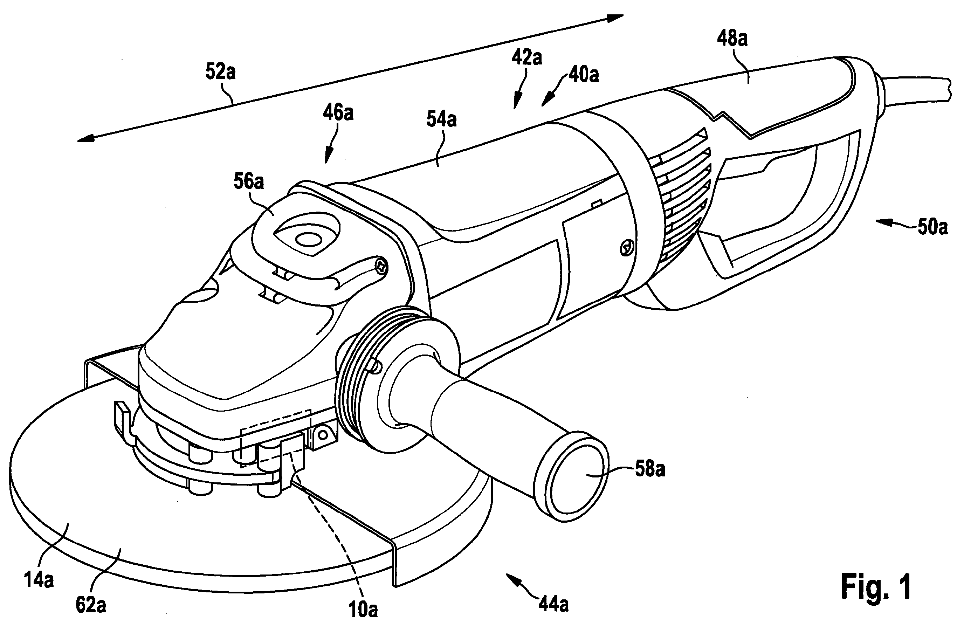

Figur 1 zeigt eine als Winkelschleifer 40a ausgebildete Handwerkzeugmaschine 42a mit einer erfindungsgemäßen Ablaufsicherungsvorrichtung 10a in einer schematischen Darstellung. Die Ablaufsicherungsvorrichtung 10a ist hierbei als Handwerkzeugmaschinenablaufsicherungsvorrichtung ausgebildet. Der Winkelschleifer 40a umfasst eine Schutzhaubeneinheit 44a, ein Handwerkzeugmaschinengehäuse 46a und einen Haupthandgriff 48a, der sich an einer einem Werkzeug 14a abgewandten Seite 50a in Richtung einer Haupterstreckungsrichtung 52a des Winkelschleifers 40a erstreckt. Das Handwerkzeugmaschinengehäuse 46a umfasst ein Motorgehäuse 54a zur Aufnahme eines Elektromotors (hier nicht näher dargestellt) und ein Getriebegehäuse 56a zur Lagerung eines Getriebes (hier nicht näher dargestellt). An dem Getriebegehäuse 56a ist ein Zusatzhandgriff 58a angeordnet. Der Zusatzhandgriff 58a erstreckt sich quer zur Haupterstreckungsrichtung 52a des Winkelschleifers 40a.

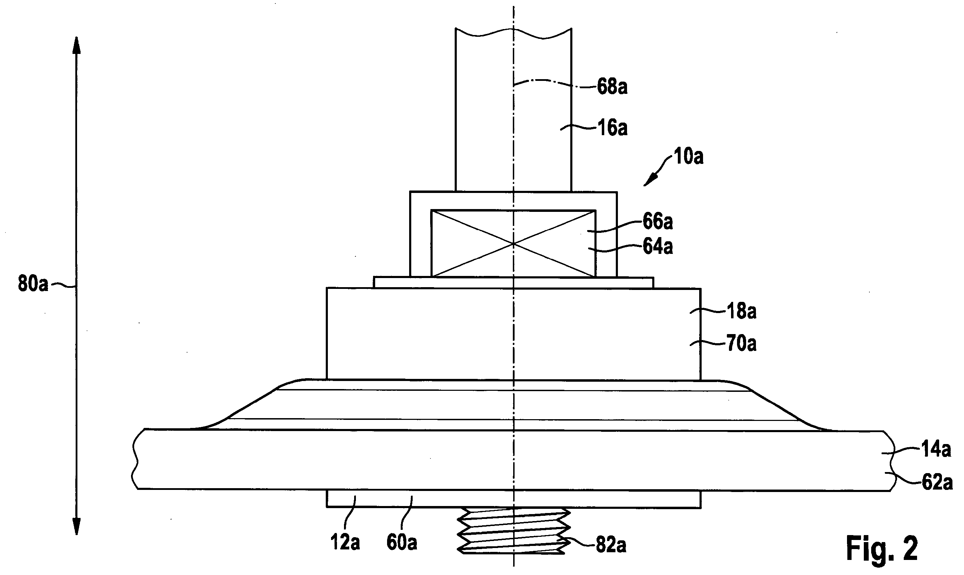

Figur 2 zeigt eine Detailansicht einer Spindel 16a der als Winkelschleifer 40a ausgebildeten Handwerkzeugmaschine 42a mit der an der Spindel 16a angeordneten Ablaufsicherungsvorrichtung 10a in einer schematischen Darstellung. Die Spindel 16a erstreckt sich im Wesentlichen senkrecht zur Haupterstreckungsrichtung 52a aus dem Getriebegehäuse 56a (hier nicht näher dargestellt). An der Spindel 16a ist die Ablaufsicherungsvorrichtung 10a zur Vermeidung eines Ablaufens eines als Spannmutter 60a ausgebildeten Spannelements 12a und/oder des als eine Trennscheibe 62a ausgebildeten Werkzeugs 14a von der Spindel 16a angeordnet. Es ist jedoch denkbar, dass das Werkzeug 14a als Schleif- oder Polierscheibe ausgebildet ist. Die Spindel 16a weist zur Aufnahme der Ablaufsicherungsvorrichtung 10a an einem Außenumfang zwei Abflachungen 64a auf, die diametral angeordnet sind und somit einen 2-Kant 66a bilden. Hierbei ist in Figur 2 nur eine der Abflachungen 64a dargestellt. Der Außenumfang der Spindel 16a ist in einer Ebene angeordnet, die im Wesentlichen senkrecht zu einer Rotationsachse 68a der Spindel 16a verläuft. Die Spindel 16a wird mittels des nicht dargestellten Getriebes und mittels des nicht dargestellten Elektromotors des Winkelschleifers 40a drehbar um die Rotationsachse 68a angetrieben. In einem Arbeitsbetrieb des Winkelschleifers 40a wird die Spindel 16a von dem Winkelschiefer 40a aus betrachtet im Uhrzeigersinn rotierend angetrieben. Hierbei wird die Ablaufsicherungsvorrichtung 10a in einem montierten Zustand ebenfalls im Uhrzeigersinn rotierend angetrieben.

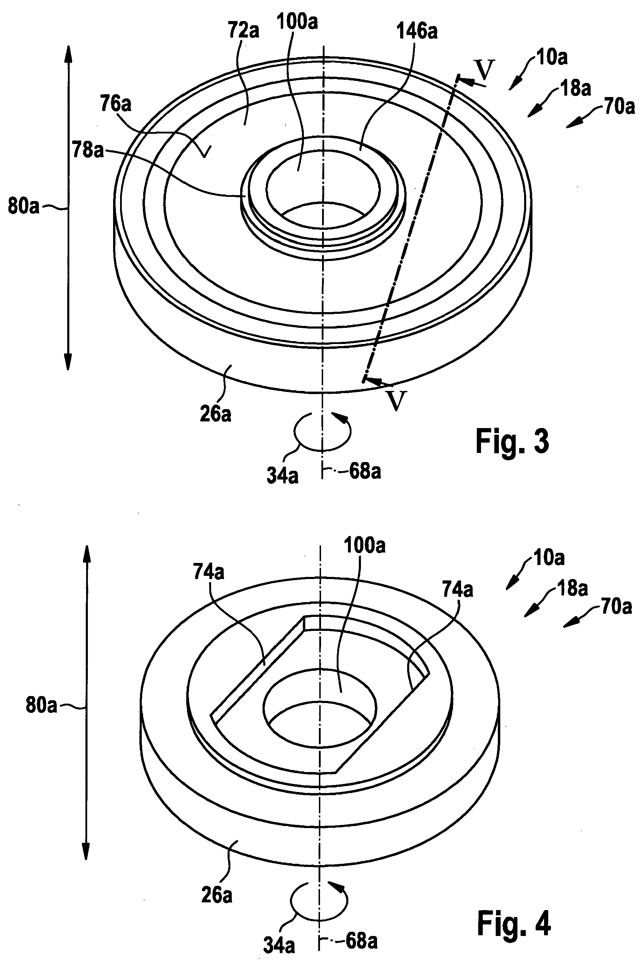

Die Ablaufsicherungsvorrichtung 10a umfasst eine als Aufnahmeflansch 70a ausgebildete Übertragungseinheit 18a, die abnehmbar mit der Spindel 16a koppelbar ist. Die Übertragungseinheit 18a umfasst ein erstes Übertragungselement 26a und ein relativ zum ersten Übertragungselement 26a bewegbares zweites Übertragungselement 72a (Figuren 3 und 4). Das erste Übertragungselement 26a ist in einem montierten Zustand der Ablaufsicherungsvorrichtung 10a zu einer Drehmomentübertragung formschlüssig mit der Spindel 16a verbunden. Das erste Übertragungselement 26a weist hierzu eine Mitnahmekontur 74a auf, die korrespondierend zum 2-Kant 66a der Spindel 16a ausgebildet ist (Figur 4). Es ist jedoch auch denkbar, dass die Spindel 16a in einem Aufnahmebereich für das erste Übertragungselement 26a kegelförmig ausgebildet ist und das erste Übertragungselement 26a eine zur kegelförmigen Ausgestaltung korrespondierende Aufnahmeöffnung aufweist, so dass in einem montierten Zustand ein Kegelsitz zwischen der Spindel 16a und dem ersten Übertragungselement 26a gebildet wird.

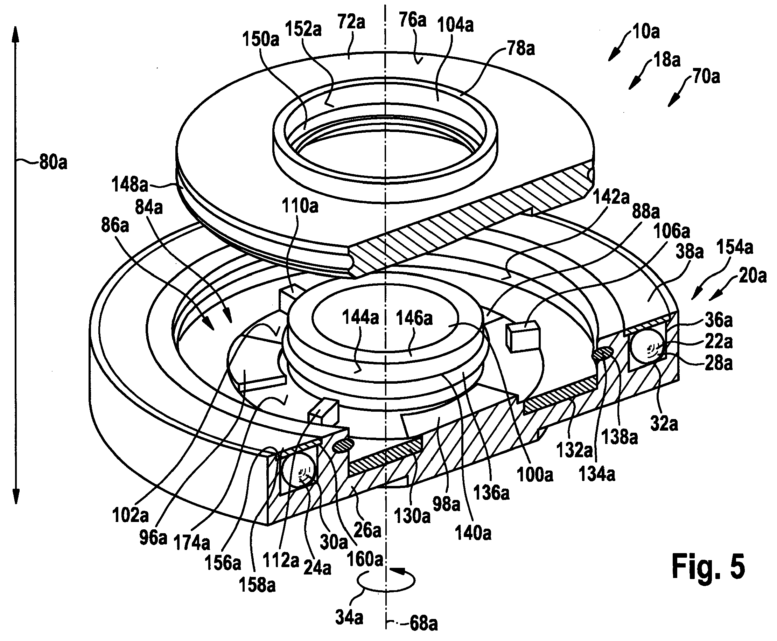

Das zweite Übertragungselement 72a ist scheibenförmig ausgebildet und weist eine Anlagefläche 76a zur Anlage des als Trennscheibe 62a ausgebildeten Werkzeugs 14a auf. Des Weiteren weist das zweite Übertragungselement 72a einen ringförmigen Bund 78a auf, der zur Aufnahme des Werkzeugs 14a vorgesehen ist (Figuren 3 und 5). Das Werkzeug 14a weist hierzu eine als Bohrung ausgebildete zentrale Öffnung auf (hier nicht näher dargestellt), die zur Montage des Werkzeugs 14a auf den Bund 78a des zweiten Übertragungselements 72a aufgeschoben wird, so dass das Werkzeug 14a an der Anlagefläche 76a des zweiten Übertragungselements 72a anliegt. Die Anlagefläche 76a des zweiten Übertragungsetements 72a und eine an der Anlagefläche 76a anliegende Seite des Werkzeugs 14a weisen hierbei eine Haftbeschichtung (hier nicht näher dargestellt) auf, so dass eine Reibung zwischen der Anlagefläche 76a des zweiten Übertragungselements 72a und der an der Anlagefläche 76a anliegenden Seite des Werkzeugs 14a hoch ist. Es ist jedoch denkbar, dass die Anlagefläche 76a und die an der Anlagefläche 76a anliegende Seite des Werkzeugs 14a eine korrespondierende, rampenartige Geometrie aufweisen, die ineinander eingreifen. Andere, einem Fachmann als sinnvoll erscheinende reibungserhöhende Maßnahmen und Ausgestaltungen der Antagefläche 76a und der an der Anlagefläche 76a anliegenden Seite des Werkzeugs 14a sind ebenfalls denkbar.

Bei einer Montage des Werkzeugs 14a wird das Werkzeug 14a mit der zentralen Öffnung entlang einer Axialrichtung 80a auf die Spindel 16a aufgeschoben, bis das Werkzeug 14a an der Anlagefläche 76a des zweiten Übertragungselements 72a der bereits an der Spindel 16a angeordneten Übertragungseinheit 18a der Ablaufsicherungsvorrichtung. 10a anliegt. Anschließend wird das als Spannmutter 60a ausgebildete Spannelement 12a mit einem Innengewinde (hier nicht näher dargestellt) des. Spannelements 12a auf ein Gewinde 82a der Spindel 16a aufgeschraubt. Hierbei wird das Werkzeug 14a zusammen mit der Übertragungseinheit 18a an der Spindel 16a verspannt, wobei sich die Übertragungseinheit 18a über das erste Übertragungselement 26a an der Spindel 16a abstützt. Mittels dem Verspannen des Werkzeugs 14a zwischen dem Spannelement 12a und der Übertragungseinheit 18a an der Spindel 16a kann in einem Arbeitsbetrieb des Winkelschleifers 40a ein Drehmoment von der Spindel 16a auf das Werkzeug 14a übertragen werden. Das Werkzeug 14a wird in dem Arbeitsbetrieb des Winkelschleifers 40a von dem Winkelschleifer 40a aus betrachtet im Uhrzeigersinn rotierend angetrieben. Im Arbeitsbetrieb des Winkelschleifers 40a wird ein Erhalten einer Spannkraft des Spannelements 12a durch eine Rotation des Werkzeugs 14a und eine Reibung zwischen dem Spannelement 12a und einer am Spannelement 12a anliegenden Seite des Werkzeugs 14a über eine Steigung des Gewindes 82a der Spindel 16a und dem Innengewinde des Spannelements 12a weiter gewährleistet.

Der Winkelschleifer 40a umfasst ferner eine Bremsvorrichtung (hier nicht näher dargestellt) zur Vermeidung eines Nachlaufen der Spindel 16a bei einem Abschaltvorgang des Winkelschleifers 40a, wie beispielsweise mittels einer Unterbrechung einer Stromzufuhr. Bei dem Abschaltvorgang schaltet der Winketschteifer 40a in einen Bremsbetrieb und bremst die Spindel 16a mittels der Bremsvorrichtung ab. Im Bremsbetrieb bewegt sich das Werkzeug 14a infolge von Massenträgheit weiter im Uhrzeigersinn bzw. weiter um die Rotationsachse 68a der Spindel 16a, so dass eine Drehmomentdifferenz zwischen dem Werkzeug 14a, der Spindel 16a, der Übertragungseinheit 18a und dem Spannelement 12a entsteht. Diese Drehmomentdifferenz führt zu einer Relativbewegung zwischen dem Werkzeug 14a, der Übertragungseinheit 18a und dem Spannelement 12a. Aufgrund einer Reibung zwischen dem Spannelement 12a und dem trägen Werkzeug 14a wird das Spannelement 12a entgegen einer im Arbeitsbetrieb des Winkelschieifers 40a erzeugten Rotationsrichtung mit dem Werkzeug 14a mitgedreht, so dass sich eine durch die Steigung des Innengewindes des Spannelements 12a und des Gewindes 82a der Spindel 16a erzeugte Gewindevorspannung lösen kann. Hierdurch kann sich das Spannelement 12a über eine gesamte Gewindelänge des Gewindes 82a der Spindel 16a lösen und das Spannelement 12a kann zusammen mit dem Werkzeug 14a von der Spindel 16a ablaufen.

Zur Vermeidung des Ablaufens des Spannelements 12a und/oder des Werkzeugs 14a weist die als Aufnahmeflansch 70a ausgebildete Übertragungseinheit 18a eine Bewegungsänderungseinheit 84a auf, die dazu vorgesehen ist, in dem Bremsbetrieb eine erste Relativbewegung zwischen dem ersten Übertragungselement 26a und dem zweiten Übertragungselement 72a in eine zweite Relativbewegung zu überführen (Figur 5). Hierbei ist die erste Relativbewegung zwischen dem ersten Übertragungselement 26a und dem zweiten Übertragungselement 72a eine Rotation um die Rotationsachse 68a. Die zweite Relativbewegung zwischen dem ersten Übertragungselement 26a und dem zweiten Übertragungselement 72a ist eine Translation entlang der Axialrichtung 80a. Die Rotation zwischen dem ersten Übertragungselement 26a und dem zweiten Übertragungselement 72a entsteht beim Bremsbetrieb aus der Drehmomentdifferenz zwischen dem Werkzeug 14a und der Übertragungseinheit 18a. Das Werkzeug 14a dreht durch die entstehende Reibung zwischen dem Werkzeug 14a und der Anlagefläche 76a des zweiten Übertragungselements 72a das zweite Übertragungselement 72a mit, wobei das erste Übertragungselement 26a mittels der Mitnahmekontur 74a formschlüssig mit dem 2-Kant 66a der Spindel 16a verbunden ist. Das zweite Übertragungselement 72a ist hierbei beweglich in dem ersten Übertragungselement 26a, das topfförmig ausgebildet ist, gelagert. Das zweite Übertragungselement 72a ist beweglich entlang einer Umfangsrichtung 34a und entlang der Axialrichtung 80a im ersten Übertragungselement 72a gelagert.

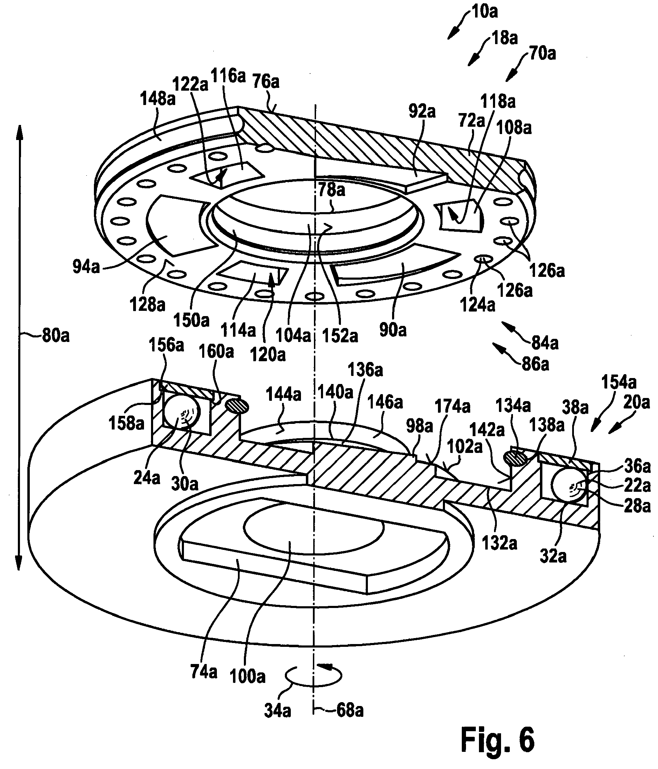

Die Bewegungsänderungseinheit 84a ist als Hubeinheit 86a ausgebildet, die dazu vorgesehen ist, das zweite Übertragungselement 72a infolge der ersten Relativbewegung, insbesondere der Rotation, relativ zum ersten Übertragungselement 26a entlang der Axialrichtung 80a zu bewegen. Die Hubeinheit 86a weist ein erstes Hubelement 88a auf, das einstückig mit dem ersten Übertragungselement 26a ausgebildet ist. Das erste Hubelement 88a ist rampenförmig ausgebildet. Ferner weist die Hubeinheit 86a ein zweites Hubelement 90a auf, das infolge der ersten Relativbewegung bzw. der Rotation des zweiten Übertragungselements 72a relativ zum ersten Übertragungselement 26a mittels eines Zusammenwirkens mit dem ersten Hubelement 88a die zweite Relativbewegung bzw. die Translation des zweiten Übertragungselements 72a relativ zum ersten Übertragungselement 26a erzeugt. Das zweite Hubelement 90a ist ebenfalls rampenförmig ausgebildet und ist einstückig mit dem zweiten Übertragungselement 72a ausgebildet (Figur 6). Insgesamt weist das zweite Übertragungselement 72a drei zweite Hubelemente 90a, 92a, 94a auf. Das erste Übertragungselement 26a weist insgesamt drei erste Hubelemente 88a, 96a, 98a auf, die mit den drei zweiten Hubelementen 90a, 92a, 94a des zweiten Übertragungselements 72a korrespondieren. Es ist jedoch auch denkbar, eine größere oder geringere Anzahl als drei Hubelemente 88a, 90a, 92a, 94a, 96a, 98a an dem ersten Übertragungselement 26a und dem zweiten Übertragungselement 72a vorzusehen. Der Fachmann wird je nach Anforderung entscheiden, welche Anzahl von Hubelementen 88a, 90a, 92a, 94a, 96a, 98a an dem ersten Übertragungselement 26a und dem zweiten Übertragungselement 72a sinnvoll erscheint.

Die ersten Hubelemente 88a, 96a, 98a erstrecken sich gleichmäßig verteilt auf einem Kreisring von 360° des ersten Übertragungselements 26a jeweils entlang eines Winkelbereichs zwischen 30° und 60° um eine zentrale Öffnung 100a des ersten Übertragungselements 26a, die zur Aufnahme der Spindel 16a vorgesehen ist. Die zentrale Öffnung 100a ist hierbei als Passbohrung ausgebildet. Die ersten Hubelemente 88a, 96a, 98a weisen eine Steigung auf, die sich ausgehend von einem auf einer Innenfläche 102a angeordneten Startpunkt in Richtung eines Endpunkts erstreckt, der in einer zur Innenfläche 102a parallelen Ebene angeordnet ist. Die Ebene ist in einem montierten Zustand des ersten Übertragungselements 26a ausgehend von der Spindel 16a in Richtung des montierten Werkzeugs 14a beabstandet zur Innenfläche 102a angeordnet.

Die zweiten Hubelemente 90a, 92a, 94a erstrecken sich gleichmäßig verteilt auf einem Kreisring von 360° des zweiten Übertragungselements 72a jeweils entlang eines Winkelbereichs zwischen 30° und 60° um eine zentrale Öffnung 104a des zweiten Übertragungselements 72a, die zur Aufnahme der Spindel 16a vorgesehen ist (Figur 6). In einem montierten Zustand der Übertragungseinheit 18a weisen die zweiten Hubelemente 90a, 92a, 94a in Richtung der Innenfläche 102a des ersten Übertragungselements 26a. Die zweiten Hubelemente 90a, 92a, 94a weisen eine mit den ersten Hubelementen 88a, 96a, 98a korrespondierende Steigung auf. Die Steigung der ersten Hubelemente 88a, 96a, 98a und der zweiten Hubelemente 90a, 92a, 94a ist hierbei gleich groß wie oder größer als eine Steigung des Gewindes 82a der Spindel 16a bzw. des Innengewindes des Spannelements 12a. Die zweiten Hubelemente 90a, 92a, 94a liegen in einem verspannten Zustand des Werkzeugs 14a an den ersten Hubelementen 88a, 96a, 98a an. Bei der Rotation des zweiten Übertragungselements 72a relativ zum ersten Übertragungselement 26a infolge eines Abbremsens der Spindel 16a im Bremsbetrieb gleiten die zweiten Hubelemente 90a, 92a, 94a auf den ersten Hubelementen 88a, 96a, 98a. Hierdurch wird ein Axialhub des zweiten Übertragungselements 72a relativ zum ersten Übertragungselement 26a entlang der Axialrichtung 80a erzeugt. Dieser Axialhub erzeugt eine Spannkraft in Richtung des Werkzeugs 14a und des Spannelements 12a, so dass ein Ablaufen des Spannelements 12a und/oder des Werkzeugs 14a von der Spindel 16a verhindert werden kann.

Die Ablaufsicherungsvorrichtung 10a umfasst zumindest ein Anschlagelement 106a, das dazu vorgesehen ist, die erste Relativbewegung zwischen dem ersten Übertragungselement 26a und dem zweiten Übertragungselement 72a bzw. die Rotation des zweiten Übertragungselements 72a relativ zum ersten Übertragungselement 26a zu begrenzen (Figur 5). Das Anschlagelement 106a ist an der von einer dem zweiten Übertragungselement 72a zugewandten Seite 174a gebildeten Innenfläche 102a des ersten Übertragungselements 26a angeordnet. Das zweite Übertragungselement 72a weist hierbei zumindest eine Ausnehmung 108a auf (Figur 6), die dazu vorgesehen ist, das Anschlagelement 106a in einem montierten Zustand der Übertragungseinheit 18a aufzunehmen. Insgesamt umfasst die Ablaufsicherungsvorrichtung 10a drei Anschlagelemente 108a, 110a, 112a, die einstückig mit dem ersten Übertragungselement 26a ausgebildet sind, und drei Ausnehmungen 108a, 114a, 116a, die einstückig mit dem zweiten Übertragungselement 72a ausgebildet sind. Es ist jedoch denkbar, eine größere oder geringere Anzahl als drei Anschlagelemente und drei Ausnehmungen 108a, 114a, 116a vorzusehen. Der Fachmann wird je nach Anforderung entscheiden, welche Anzahl von Anschlagelementen 106a, 110a, 112a und welche Anzahl an Ausnehmungen 108a, 114a, 116a sinnvoll erscheint.

Die drei Anschlagelemente 106a, 110a, 112a sind entlang dem Kreisring von 360° des ersten Übertragungselements 26a gleichmäßig verteilt, voneinander beabstandet und beabstandet von den drei ersten Hubelementen 88a, 96a, 98a des ersten Übertragungselements 26a angeordnet. Ferner weisen die drei Anschlagelemente 106a, 110a, 112a Axialerstreckungen auf, die entlang der Axialrichtung 80a verlaufen. Die Axialerstreckungen sind hierbei derart gewählt, dass sich die drei Anschlagelemente 106a, 110a, 112a in einem montierten Zustand der Übertragungseinheit 18a zumindest in die drei Ausnehmungen 108a, 114a, 116a des zweiten Übertragungselements 72a erstrecken. Die drei Ausnehmungen 108a, 114a, 116a erstrecken sich auf dem Kreisring von 360° des zweiten Übertragungselements 72a gleichmäßig verteilt jeweils entlang eines Winkelbereichs zwischen 15° und 30° und sind beabstandet zueinander und zu den zweiten Hubelementen 90a, 92a, 94a um die zentrale Öffnung 104a des zweiten Übertragungselements 72a angeordnet.

Die Anschlagelemente 106a, 110a, 112a begrenzen die Rotation zwischen dem ersten Übertragungselement 26a und dem zweiten Übertragungselement 72a auf einen durch eine Abmessung der Ausnehmungen 108a, 114a, 116a und eine Abmessung der Anschlagelemente 106a, 110a, 112a definierten Winkelbereich. Hierdurch wird ein gewünschtes Lösen des Spannelements 12a beispielsweise bei einem Werkzeugwechsel ermöglicht. Wird das Spannelement 12a entgegen der Rotationsrichtung im Arbeitsbetrieb gedreht, wird das zweite Übertragungselement 72a relativ zum ersten Übertragungselement 26a verdreht, bis die Anschlagefemente 106a, 110a, 112a des ersten Übertragungselements 26a an Randbereichen 118a, 120a, 122a der Ausnehmungen 108a, 114a, 116a des zweiten Übertragungselem.ents 72a anschlagen. Das zweite Übertragungselement 72a ist mittels dem Anschlagen bzw. einem Anliegen der Anschlagelemente 106a, 110a, 112a an den Randbereichen 118a, 120a, 122a der Ausnehmungen 108a, 114a, 116a fest mit dem ersten Übertragungselement 26a gekoppelt. Ein durch ein Abschrauben des Spannelements 12a erzeugtes Drehmoment wird über die Mitnahmekontur 74a an dem 2-Kant 66a der Spindel 16a abgestützt und das Spannelement 12a kann gelöst und von der Spindel 16a abgeschraubt werden.

Des Weiteren weist die Ablaufsicherungsvorrichtung 10a zumindest einen Schmiermittelaufnahmeraum 1.24a zur Aufnahme von Schmiermittel zur Verringerung einer Reibung bei der ersten Relativbewegung zwischen dem ersten Übertragungselement 26a und dem zweiten Übertragungselement 72a auf. Der Schmiermittelaufnahmeraum 124a ist von einer Schmiermitteltasche 126a gebildet. Insgesamt sind mehrere Schmiermitteltaschen 126a entlang eines Kreisrings um die zentrale Öffnung 104a des zweiten Übertragungselements 72a gleichmäßig voneinander beabstandet angeordnet (Figur 6). Die Schmiermitteltaschen 126a sind in einer der Anlagefläche 76a abgewandten Seite 128a des zweiten Übertragungselements 72a angeordnet. Ferner sind in den rampenartigen ersten Hubelementen 88a, 96a, 98a und in den rampenartigen zweiten Hubelementen 90a, 92a, 94a ebenfalls Schmiermitteltaschen (hier nicht näher dargestellt) angeordnet, so dass ein geringer Reibungswiderstand bei einem Gleiten der rampenförmigen ersten Hubelemente 88a, 96a, 98a auf den rampenförmigen zweiten Hubelementen 90a, 92a, 94a bei einer Rotation des zweiten Übertragungselements 72a relativ zum ersten Übertragungselement 26a entsteht.

Des Weiteren weist das erste Übertragungselement 26a ein Lagerelement 130a auf, das in einer kreisringförmigen Ausnehmung 132a in der Innenfläche 102a des ersten Übertragungselements 26a angeordnet ist. Das Lagerelement 130a ist hierbei als Gleitlager ausgebildet. Es ist jedoch denkbar, dass das Lagerelement 130a in einer alternativen Ausgestaltung als Wälzlager ausgebildet ist. In der kreisringförmigen Ausnehmung 132a sind ebenfalls mehrere Schmiermitteltaschen (hier nicht näher dargestellt) zur Aufnahme von Schmiermittel gleichmäßig voneinander beabstandet angeordnet.

Die Übertragungseinheit 18a weist ferner ein erstes Dichtelement 134a und ein zweites Dichtelement 136a auf, die dazu vorgesehen sind, die Übertragungseinheit 18a vor Staubeintritt aus einer äußeren Umgebung zu schützen und einen Schmiermittelaustritt von innen zu vermeiden. Das erste Dichtelement 134a ist hierbei in einer ersten Nut 138a des ersten Übertragungselements 26a angeordnet und das zweite Dichtelement 136a ist in einer zweiten Nut 140a des ersten Übertragungselements 26a angeordnet (Figur 5). Die erste Nut 138a ist in einer Seitenfläche 142a des ersten Übertragungselements 26a angeordnet. Die Seitenfläche 142a erstreckt sich im Wesentlichen senkrecht zur Innenfläche 102a des ersten Übertragungselements 26a und entlang eines gesamten dem zweiten Übertragungselement 72a zugewandten Umfangs des ersten Überfragungselements 26a, der in einer zur Innenfläche 102a parallelen Ebene verläuft. Die zweite Nut 140a ist in einer der Seitenfläche 142a zugewandten Seite 144a eines die zentrale Öffnung 100a umgebenden Hohlzylinders 146a angeordnet. Das erste Dichtelement 134a ist passgenau in die erste Nut 138a eingepresst und das zweite Dichtelement 136a ist passgenau in die zweite Nut 140a eingepresst.

Das zweite Übertragungselement 72a weist eine mit der ersten Nut 138a des ersten Übertragungselements 26a korrespondierende erste Dichtelementaufnahme 148a auf. Die erste Dichtelementaufnahme 148a ist entlang eines Außenumfangs des zweiten Übertragungselements 72a angeordnet und erstreckt sich entlang des gesamten Außenumfangs. Der Außenumfang des zweiten Übertragungselements 72a verläuft in einer Ebene, die sich parallel zur Anlagefläche 76a erstreckt. Hierbei weist die erste Dichtelementaufnahme 148a eine Erstreckung entlang der Axialrichtung 80a auf, die größer ist als eine Erstreckung des ersten Dichtelements 134a entlang der Axialrichtung 80a. Hierdurch wird eine Dichtungsfunktion bei einem Axialhub des zweiten Übertragungselements 72a relativ zum ersten Übertragungselement 26a gewährleistet.

Ferner weist das zweite Übertragungselement 72a eine zur zweiten Nut 140a des ersten Übertragungselements 26a korrespondierende zweite Dichtelementaufnahme 150a auf. Die zweite Dichtelementaufnahme 150a ist in einer Innenseite 152a der zentralen Öffnung 104a des zweiten Übertragungselements 72a angeordnet und erstreckt sich entlang eines gesamten Umfangs der zentralen Öffnung 104a. Der Umfang der zentralen Öffnung 104a verläuft in einer Ebene, die sich parallel zur Anlagefläche 76a des zweiten Übertragungselements 72a erstreckt. Die zweite Dichtelementaufnahme 150a weist eine Erstreckung entlang der Axialrichtung 80a auf, die größer ist als eine Erstreckung des zweiten Dichtelements 136a entlang der Axialrichtung 80a. Hierdurch wird ebenfalls eine Dichtungsfunktion bei einem Axialhub des zweiten Übertragungselements 72a relativ zum ersten Übertragungselement 26a gewährleistet. Mittels dem ersten Dichtelement 134a und dem zweiten Dichtelement 136a werden das erste Übertragungselement 26a und das zweite Übertragungselement 72a miteinander verbunden und axial fixiert.

Die Ablaufsicherungsvorrichtung 10a weist ferner eine Unwuchtausgleichseinheit 20a auf, die dazu vorgesehen ist, eine Unwucht der Übertragungseinheit 18a in einem Arbeitsbetrieb des Winkelschleifers 40a in einem montierten Zustand der Übertragungseinheit 18a an der Spindel 16a zu reduzieren. Bei einer Rotation des Werkzeugs 14a und/oder der Ablaufsicherungsvorrichtung 10a um die Rotationsachse 68a können Schwingungen durch Unwuchten auftreten. Diese Schwingungen werden mittels der Unwuchtausgleichseinheit 20a reduziert und bevorzugt ausgeglichen. Die Unwuchtausgleichseinheit 20a weist hierbei Unwuchtausgieichseleme.nte 22a, 24a auf, die beweglich im ersten Übertragungselement 26a der Übertragungseinheit 18a gelagert sind (in den Figuren sind zur Veranschaulichung lediglich zwei dargestellt). Die Unwuchtausgleichsefemente 22a, 24a sind in einer sich entlang der Umfangsrichtung 34a erstreckenden u-förmigen Nut 36a des ersten Übertragungselements 26a beweglich gelagert ist. Die Nut 36a erstreckt sich entlang der Umfangsrichtung 34a über 360° im ersten Übertragungselement 26a.

Die Unwuchtausgleichselemente 22a, 24a sind als Wälzkörper 28a, 30a ausgebildet. Die Wälzkörper 28a, 30a werden in einer einstückig mit dem ersten Übertragungselement 26a ausgebildeten Laufbahn 32a geführt. Die Laufbahn 32a ist hierbei in der Nut 36a des ersten Übertragungselements 26a angeordnet. Ferner erstreckt sich die Laufbahn 32a ebenfalls entlang der Umfangsrichtung 34a über 360° in der Nut 36a. Die Unwuchtausgleichseinheit 20a umfasst ferner ein Verschlusselement 38a, das dazu vorgesehen ist, die Nut 36a zu verschließen und/oder abzudichten. Das Verschlusselement 38a ist kreisringförmig ausgebildet. Ferner ist das Verschlusselement 38a in einem montierten Zustand in einer Ebene parallel zur Innenfläche 102a des ersten Übertragungselements 26a angeordnet. Das erste Übertragungselement 26a weist zur Aufnahme des Verschlusselements einen Aufnahmebereich 154a auf. Der Aufnahmebereich 154a ist an einer in einem montieren Zustand der Übertragungseinheit 18a dem Werkzeug 14a zugewandten Seite 156a der Nut 36a angeordnet. Hierbei wird der Aufnahmebereich von zwei einander gegenüberliegenden stufenförmigen Absätzen 158a, 160a der Nut gebildet. Eine andere, dem Fachmann als sinnvoll erscheinende Ausführung des Aufnahmebereichs ist ebenfalls denkbar.

Die mittels des Verschlusselements 38a verschlossene Nut 36a bildet somit einen kreisringförmigen Hohlraum, in dem die Unwuchtausgleichselemente 22a, 24a angeordnet sind. Innerhalb des kreisringförmigen Hohlraums können sich die Unwuchtausgleichselemente 22a, 24a, geführt durch die Laufbahn 32a, entlang der Umfangsrichtung 34a bewegen. Die Unwuchtausgleichselemente 22a, 24a sind in einem Ruhezustand entlang der Umfangsrichtung 34a entlang eines Winkelbereichs kleiner als 200° im Wesentlichen aneinander anliegend im kreisringförmigen Hohlraum angeordnet. Der kreisringförmige Hohlraum ist ferner mittels eines als Dämpfungsflüssigkeit ausgebildeten Dämpfungselements der Unwuchtausgleichseinheit 20a gefüllt. Das Dämpfungselement ist dazu vorgesehen, Schwingungen der Unwuchtausgleichselemente 22a, 24a zu dämpfen und eine verzögerte Reaktion der Unwuchtausgleichselemente 22a, 24a bei einem Anlaufen bzw einem Starten einer Rotation der Ablaufsicherungsvorrichtung 10a um die Rotationsachse 68a zu erreichen. Bei einem Anlaufen bzw. einem Starten einer Rotation der Ablaufsicherungsvorrichtung 10a zu Beginn eines Arbeitsbetriebs des Winkelschleifers 40a werden die Unwuchtausgleichselemente 22a, 24a entlang der Umfangsrichtung 34a im kreisringförmigen Hohlraum bewegt, bis die Unwuchtausgleichselemente 22a, 24a eine Auswuchtposition eingenommen haben. Die Unwuchtausgleichselemente 22a, 24a gleichen im Arbeitsbetrieb beispielsweise eine durch einen Abtrag am Werkzeug 14a hervorgerufene Unwucht und/oder eine fertigungsbedingte Unwucht aus. Hierbei erzeugen die Unwuchtausgleichselemente 22a, 24a in der Auswuchtposition eine der Unwucht entgegengesetzte Kraft. Die der Unwucht entgegengesetzte Kraft wird infolge einer veränderten Massenverteilung der Ablaufsicherungsvorrichtung 10a mittels der beweglichen Unwuchtausgleichselemente 22a, 24a erzeugt.

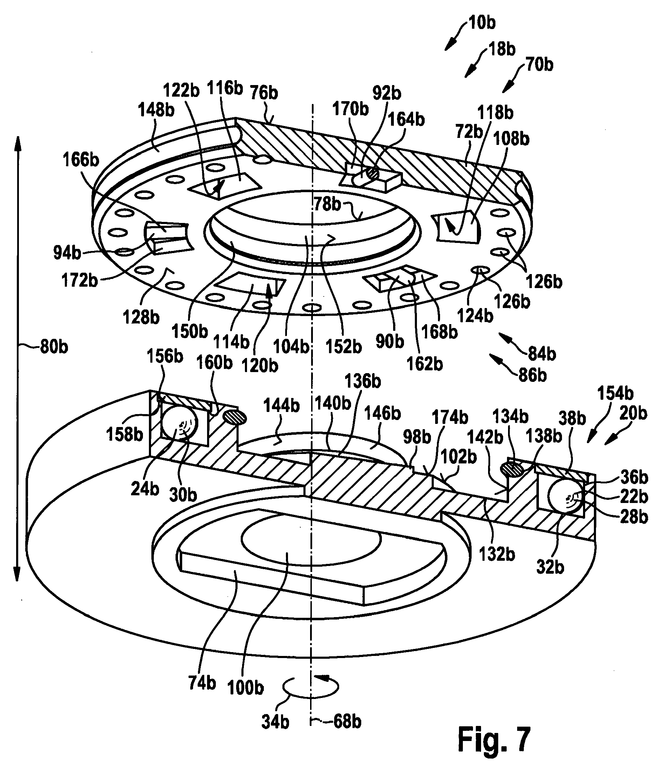

In Figur 7 ist ein zweites, alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem ersten Ausführungsbeispiel in den Figuren 1 bis 6, wobei bezüglich gleich bleibender Bauteile, Merkmale und Funktionen auf die Beschreibung des ersten Ausführungsbeispiels in den Figuren 1 bis 6 verwiesen werden kann.

Figur 7 zeigt eine perspektivische Detailansicht einer alternativen erfindungsgemäßen Ablaufsicherungsvorrichtung 10b in einem geöffneten Zustand mit einem analogen Schnitt gemäß der Linie V-V aus Fig. 3. Die Ablaufsicherungsvorrichtung 10b kann hierbei an einer Spindel 16b eines, wie in der Figur 1 gezeigten Winkelschleifers 44a angeordnet sein. Die Ablaufsicherungsvorrichtung 10b umfasst eine Übertragungseinheit 18b, die abnehmbar mit der Spindel 16b koppelbar ist. Die Übertragungseinheit 18b umfasst ein erstes Übertragungselement 26b und ein relativ zum ersten Übertragungselement 26b bewegbares zweites Übertragungselement 72b. Des Weiteren umfasst die Übertragungseinheit 18b eine als Hubeinheit 86b ausgebildete Bewegungsänderungseinheit 84b, die dazu vorgesehen ist, in einem Bremsbetrieb, zumindest teilweise eine erste Relativbewegung zwischen dem ersten Übertragungselement 26b und dem zweiten Übertragungselement 72b in eine zweite Relativbewegung zu überführen.

Die Hubeinheit 86b weist ein erstes rampenförmiges Hubelemente 88b auf, das einstückig mit dem ersten Übertragungselement 26b ausgebildet ist. Insgesamt weist die Hubeinheit 86b drei erste Hubelemente 88b, 96b, 98b auf, die einstückig mit dem ersten Übertragungselement 26b ausgebildet sind. Ferner weist die Hubeinheit 86b zumindest ein zweites Hubelement 90b auf, das an einer einer Anlagefläche 76b abgewandten Seite 128b des zweiten Übertragungselements 72b angeordnet ist. Insgesamt weist die Hubeinheit 86b drei zweite Hubelemente 90b, 92b, 94b auf. Die zweiten Hubelemente 90b, 92b, 94b sind als Wälzkörper 162b, 164b, 166b ausgebildet. Die Wälzkörper 162b, 164b, 166b sind in Ausnehmungen 168b, 170b, 172b in der der Anlagefläche 76b abgewandten Seite 128b des zweiten Übertragungselements 72b angeordnet. Die Ausnehmungen 168b, 170b, 172b sind entlang eines Kreisrings gleichmäßig verteilt und beabstandet zueinander im zweiten Übertragungselement 72b angeordnet. Die Wälzkörper 162b, 164b, 166b des zweiten Übertragungselements 72b korrespondieren mit den rampenförmigen ersten Hubelementen 88b, 96b, 98b des ersten Übertragungselements 26b. Es ist jedoch denkbar, dass in einer alternativen Ausgestaltung die ersten Hubelemente 88b, 96b, 98b einstückig mit dem zweiten Übertragungselement 72b ausgebildet sind und die Wälzkörper 162b, 164b, 166b an dem ersten Übertragungselement 26b angeordnet sind.

Bei einer Rotation des zweiten Übertragungselements 72b relativ zum ersten Übertragungselement 26b infolge eines Abbremsen der Spindel 16b in einem Bremsbetrieb des Winkelschleifers 40b wälzen sich die Wälzkörper 162b, 164b, 166b entlang den rampenförmigen ersten Hubelementen 88b, 96b, 98b ab und erzeugen somit einen Axialhub entlang einer Axialrichtung 80b des zweiten Übertragungselements 72b relativ zum ersten Übertragungselement 26b.

Die Abfaufsicherungsvorrichtung 10b weist ferner eine Unwuchtausgleichseinheit 20b auf, die dazu vorgesehen ist, eine Unwucht der Übertragungseinheit 18b in einem Arbeitsbetrieb des Winkelschleifers 40b in einem montierten Zustand der Übertragungseinheit 18b an der Spindel 16b zu reduzieren. Bei einer Rotation eines Werkzeugs 14b und/oder der Ablaufsicherungsvorrichtung 10b um die Rotationsachse 68b können Schwingungen durch Unwuchten auftreten. Diese Schwingungen werden mittels der Unwuchtausgleichseinheit 20b reduziert und bevorzugt ausgeglichen. Die Unwuchtausgleichseinheit 20b weist hierbei Unwuchtausgleichselemente 22b, 24b auf, die beweglich im ersten Übertragungselement 26b der Übertragungseinheit 18b gelagert sind (in den Figuren sind zur Veranschaulichung lediglich zwei dargestellt). Die als Wälzkörper 28b, 30b ausgebildeten Unwuchtausgleichselemente 22b, 24b sind in einer sich entlang der Umfangsrichtung 34b erstreckenden u-förmigen Nut 36b des ersten Übertragungselements 26b beweglich gelagert. Die Nut 36b erstreckt sich entlang der Umfangsrichtung 34b über 360° im ersten Übertragungselement 26b. Die Unwuchtausgleichselemente 22b, 24b können sich somit zum Ausgleichen einer Unwucht in der Nut abwälzen und entlang der Umfangsrichtung 34b innerhalb der Nut bewegen.

## Patentansprüche

1. Ablaufsicherungsvorrichtung, insbesondere Handwerkzeugmaschinenablaufsicherungsvorrichtung, zur Vermeidung eines Ablaufens eines Spannelements (12a) und/oder eines Werkzeugs (14a) von einer Spindel (16a) in einem Bremsbetrieb, mit zumindest einer Übertragungseinheit (18a; 18b), wobei die Übertragungseinheit (18a; 18b) ein erstes Übertragungselement (26a; 26b), ein relativ zum ersten Übertragungselement (26a; 26b) bewegbares zweites Übertragungselement (72a; 72b) und eine Bewegungsänderungseinheit (84a; 84b) umfasst, die dazu vorgesehen ist, in dem Bremsbetrieb eine erste Relativbewegung zwischen dem ersten Übe.rtragungselement (26a; 26b) und dem zweiten Übertragungselement (72a; 72b) in eine zweite Relativbewegung zu überführen,
**gekennzeichnet durch** eine Unwuchtausgleichseinheit (20a; 20b), die dazu vorgesehen ist, eine Unwucht der Übertragungseinheit (18a; 18b) in einem Betrieb zumindest zu reduzieren, wobei die Unwuchtausgleichseinheit (20a; 20b) zumindest ein Unwuchrtausgleichselement (22a, 24a; 22b, 24b) aufweist, das beweglich in dem ersten Übertragungselement (26a; 26b) der Übertragungseinheit (18a; 18b) gelagert ist.

2. Ablaufsicherungsvorrichtung zumindest nach Anspruch 21,
**dadurch gekennzeichnet, dass** das Unwuchtausgleichselement (22a, 24a; 22b, 24b) als Wälzkörper (28a, 30a; 28b, 30b) ausgebildet ist.

3. Ablaufsicherungsvorrichtung nach Anspruch 32,
**dadurch gekennzeichnet, dass** der Wälzkörper (28a, 30a; 28b, 30b) zumindest in einer einstückig mit dem Übertragungselement (26a; 26b) ausgebildeten Laufbahn (32a: 32b) geführt ist.

4. Ablaufsicherungsvorrichtung nach einem der vorhergehenden Ansprüche,
**dadurch gekennzeichnet, dass** das Unwuchtausgleichselement (22a, 24a; 22b, 24b) in einer sich entlang einer Umfangsrichtung (34a; 34b) erstreckenden u-förmigen Nut (36a; 36b) des Übertragungselements (26a; 26b) beweglich gelagert ist.

5. Ablaufsicherungsvorrichtung nach Anspruch 54,
**dadurch gekennzeichnet, dass** die Unwuchtausgleichseinheit (20a; 20b) ein Verschlusselement (38a; 38b) aufweist, das dazu vorgesehen ist, die Nut (36a; 36b) abzudichten.

6. Ablaufsicherungsvorrichtung nach Anspruch 65,
**dadurch gekennzeichnet, dass** das Verschlusselement (38a; 38b) kreisringförmig ausgebildet ist.

7. Ablaufsicherungsvorrichtung zumindest nach Anspruch 54,
**dadurch gekennzeichnet, dass** die Unwuchtausgleichseinheit (20a; 20b) zumindest eine Dämpfungselement umfasst, das in der Nut (36a; 36b) des Übertragungselements (26a; 26b) angeordnet ist.

8. Ablaufsicherungsvorrichtung nach einem der vorhergehenden Ansprüche,
**dadurch gekennzeichnet, dass** die Übertragungseinheit (18a; 18b) abnehmbar mit der Spindel (16a) koppelbar ist.

9. Handwerkzeugmaschine, insbesondere Winkelschleifer, mit einer Ablaufsicherungsvorrichtung nach einem der vorhergehenden Ansprüche.

## Claims

1. Runoff safety device, in particular a hand machine tool runoff safety device, for preventing runoff of a chucking element (12a) and/or of a tool (14a) from a spindle (16a) in a braking mode, having at least one transfer unit (18a; 18b), wherein the transfer unit (18a; 18b) comprises a first transfer element (26a; 26b), a second transfer element (72a; 72b) which is movable relative to the first transfer element (26a; 26b), and a movement changing unit (84a; 84b), which movement changing unit is provided for transferring a first relative movement between the first transfer element (26a; 26b) and the second transfer element (72a; 72b) into a second relative movement in the braking mode,
**characterized by** an unbalance compensating unit (20a; 20b) which is provided at least for reducing an unbalance of the transfer unit (18a; 18b) during operation, wherein the unbalance compensating unit (20a, 20b) has at least one unbalance compensating element (22a, 24a; 22b, 24b) which is movably mounted in the first transfer element (26a; 26b) of the transfer unit (18a; 18b).

2. Runoff safety device according to Claim 1,
**characterized in that** the unbalance compensating element (22a, 24a; 22b, 24b) is embodied as a roller body (28a, 30a; 28b, 30b).

3. Runoff safety device according to Claim 2,
**characterized in that** the roller body (28a, 30a; 28b, 30b) is guided at least in one raceway (32a; 32b) which is embodied in one piece with the transfer element (26a; 26b).

4. Runoff safety device according to one of the preceding claims, **characterized in that** the unbalance compensating element (22a, 24a; 22b, 24b) is movably mounted in a U-shaped groove (36a; 36b) in the transfer element (26a; 26b) which extends in a circumferential direction (34a; 34b).

5. Runoff safety device according to Claim 4,
**characterized in that** the unbalance compensating unit (20a; 20b) has a closure element (38a; 38b) which is provided for sealing the groove (36a; 36b).

6. Runoff safety device according to Claim 5,
**characterized in that** the closure element (38a; 38b) is embodied in the form of a circular ring.

7. Runoff safety device according to at least claim 4,
**characterized in that** the unbalance compensating unit (20a; 20b) comprises at least one damping element which is arranged in the groove (36a; 36b) in the transfer element (26a; 26b).

8. Runoff safety device according to one of the preceding claims,
**characterized in that** the transfer unit (18a; 18b) can be coupled to the spindle (16a) in a removable fashion.

9. Hand machine tool, in particular angle grinder, having a runoff safety device according to one of the preceding claims.

## Revendications

1. Dispositif de sécurité contre le desserrage, en particulier dispositif de sécurité contre le desserrage pour une machine-outil à main, pour éviter le desserrage d'un élément de serrage (12a) et/ou d'un outil (14a) d'une broche (16a) en mode de fonctionnement de freinage, comprenant au moins une unité de transfert (18a ; 18b), l'unité de transfert (18a ; 18b) comprenant un premier élément de transfert (26a ; 26b), un deuxième élément de transfert (72a ; 72b) déplaçable par rapport au premier élément de transfert (26a ; 26b) et une unité de variation de mouvement (84a ; 84b) qui est prévue pour transférer, en mode de fonctionnement de freinage, un premier mouvement relatif entre le premier élément de transfert (26a ; 26b) et le deuxième élément de transfert (72a ; 72b) à un deuxième mouvement relatif,
**caractérisé par** une unité de compensation de balourd (20a ; 20b) qui est prévue pour au moins réduire un balourd de l'unité de transfert (18a ; 18b) pendant un fonctionnement, l'unité de compensation de balourd (20a ; 20b) présentant au moins un élément de compensation de balourd (22a, 24a ; 22b, 24b) qui est supporté de manière déplaçable dans le premier élément de transfert (26a ; 26b) de l'unité de transfert (18a ; 18b).

2. Dispositif de sécurité contre le desserrage selon la revendication 1, **caractérisé en ce que** l'élément de compensation de balourd (22a, 24a ; 22b, 24b) est réalisé sous forme de corps de roulement (28a, 30a ; 28b, 30b).

3. Dispositif de sécurité contre le desserrage selon la revendication 2, **caractérisé en ce que** le corps de roulement (28a, 30a ; 28b, 30b) est guidé au moins dans un chemin de roulement (32a ; 32b) réalisé d'une seule pièce avec l'élément de transfert (26a ; 26b).

4. Dispositif de sécurité contre le desserrage selon l'une quelconque des revendications précédentes, **caractérisé en ce que** l'élément de compensation de balourd (22a, 24a ; 22b, 24b) est supporté de manière déplaçable dans une rainure en forme de U (36a ; 36b) de l'élément de transfert (26a ; 26b) s'étendant le long de la direction périphérique (34a ; 34b).

5. Dispositif de sécurité contre le desserrage selon la revendication 4, **caractérisé en ce que** l'unité de compensation de balourd (20a ; 20b) présente un élément de fermeture (38a ; 38b) qui est prévu pour étanchéifier la rainure (36a ; 36b).

6. Dispositif de sécurité contre le desserrage selon la revendication 5, **caractérisé en ce que** l'élément de fermeture (38a ; 38b) est réalisé sous forme annulaire circulaire.

7. Dispositif de sécurité contre le desserrage selon au moins la revendication 4, **caractérisé en ce que** l'unité de compensation de balourd (20a ; 20b) présente au moins un élément d'amortissement qui est disposé dans la rainure (36a ; 36b) de l'élément de transfert (26a ; 26b).

8. Dispositif de sécurité contre le desserrage selon l'une quelconque des revendications précédentes, **caractérisé en ce que** l'unité de transfert (18a ; 18b) est accouplée de manière amovible à la broche (16a).

9. Machine-outil à main, en particulier meuleuse d'angle, comprenant un dispositif de sécurité contre le desserrage selon l'une quelconque des revendications précédentes.
